# EUROPÄISCHE PATENTSCHRIFT

(11) **EP 1 523 285 B1**
(45) Veröffentlichungstag und Bekanntmachung des Hinweises auf die Patenterteilung: **12.12.2007**
(21) Anmeldenummer: 03787709.9
(22) Anmeldetag: 22.07.2003
(51) Int. Cl.: A61C 13/00

(54) **VERMESSUNGSEINRICHTUNG FÜR EINE VORLAGE UND DAMIT VERSEHENE BEARBEITUNGSMASCHINE**
MEASURING DEVICE FOR A MODEL AND MACHINING DEVICE EQUIPPED WITH THE SAME
DISPOSITIF DE MESURE DE MODÈLES ET MACHINE D'USINAGE EQUIPÉE D'UN TEL DISPOSITIF

(30) Priorität: 22.07.2002 DE 10233314
(43) Veröffentlichungstag der Anmeldung: 20.04.2005
(73) Patentinhaber: Sirona Dental Systems GmbH, 64625 Bensheim (DE)
(72) Erfinder: BASLER, Franz, 69514 Laudenbach (DE)
(74) Vertreter: Sommer, Peter
(86) Internationale Anmeldenummer: PCT/DE2003/002457
(87) Internationale Veröffentlichungsnummer: WO 2004/016189

(56) Entgegenhaltungen:
- EP-A- 0 943 296
- EP-A- 1 093 768
- WO-A-01/32093
- WO-A-99/13796

## Beschreibung

### Technisches Gebiet

Die Erfindung betrifft eine Vermesiungseinrichtung, insbesondere einer Bearbeitungsvorrichtung, für die Vermessung einer Vorlage zur Herstellung eines Formteils, insbesondere aus einer Dentalkeramik. Ein weiterer Gegenstand der Erfindung ist eine Bearbeitungsmaschine mit einer derartigen Vermessungseinrichtung.

Werden Rohlinge in Form von teilweise ausgehärteten Keramikblöcken bearbeitet, welche nach der Bearbeitung einem Sinterprozess zur Erzielung der Endfestigkeit unterworfen werden, so müssen diese gegenüber dem Fertigteil vergrößert hergestellt werden, da sie während des Sinterprozesses schrumpfen. Die Schrumpfungsparameter beispielsweise einer Dentalkeramik sind in der Regel abhängig von der Charge, aus welcher die Rohlinge gebildet wurden. Diese Schrumpfungsparameter müssen daher vor der Bearbeitung mittels Materialabtrag bei der Berechnung des durch Materialabtrag herzustellenden Halbfertigteils zugänglich gemacht werden.

### Stand der Technik

Gemäß der WO 01 97 707 werden die Schrumpfungsparameter auf der Halterung durch Aufdrucken eines Strichcodes angegeben. In der WO 01 32 093 wird nur allgemein eine Kennung offenbart. Es ist darüber hinaus bekannt, die Kennung auf dem Keramikblock selbst anzubringen.

Aus der DE 40 30 176 A1 ist eine Schleifmaschine bekannt, welche eine Tastatur, einen Bildschirm und eine Vermessungskamera aufweist. Weiterhin ist aus der EP 1 093 768 A2 eine Vorrichtung mit einer Vermessungseinrichtung und einer Bearbeitungseinrichtung zur Herstellung eines Passkörpers für Zahnrestaurationen bekannt.

Aus dem Stand der Technik ist bekannt einen handelsüblichen Strichcode-Leser anzuschließen, der die auf dem Rohling befindlichen im Strichcode verschlüsselten Schrumpfungsdaten einliest. Dies ist im Prinzip in der WP 1 106 146 beschrieben. Darüber hinaus ist bekannt, die Daten mittels Tastatureingabe am PC zu erfassen.

Erfordert die erste Ausgestaltung einen eigenen Strich-Code-Leser, in der Regel als Scanner ausgebildet, so ist die zweite Ausführung der manuellen Eingabe oftmals fehleranfällig.

Weiterhin befindet sich unter dem Handelsnamen Cercon ein Gerät des Unternehmens Degussa/Dentsply auf dem Markt, das Bearbeitung eines Werkstücks, 3D-Vermessung einer Vorlage und Strichcodelesen einer am Werkstück angebrachten Kennung in einem Gerät, jedoch an jeweils unterschiedlichen Stellen und mit jeweils unterschiedlichen Mitteln verbindet. Auch hier ist daher noch stets die Fehlerquelle vorhanden, dass nach dem Scannen der Kennung des zu bearbeitenden Rohlings doch noch ein Austausch des Rohlings erfolgt, etwa weil der Rohling vor der Befestigung in der Aufnahme nochmals abgelegt wurde.

Die Aufgabe der Erfindung besteht darin, eine Vermessungseinrichtung so weiter zu bilden, dass die materialspezifischen Informationen, insbesondere Schrumpfungsparameter, ohne großen Aufwand und mit hoher Fehlersicherheit erfasst werden können.

Darüber hinaus soll eine Bearbeitungsvorrichtung geschaffen werden, bei welcher die Gefahr der Verwechslung des gekennzeichneten Werkstücks weiter verringert wird.

### Darstellung der Erfindung

Die Aufgabe wird gemäß Anspruch 1 gelöst. Vorteilhafte Ausgestaltungen sind in den Unteransprüchen angegeben.

Bei der Vermessungseinrichtung mit Mitteln zur Vermessung von Vorlagen für die Herstellung von dentalen Passkörpern unter Erzeugung eines dreidimensionalen Datensatzes als Vorlage für eine dreidimensionale Bearbeitung eines Werkstücks sind die Mittel zur Vermessung auch zur Erfassung einer Kennung mit Informationen über das Werkstück ausgebildet.

Dadurch ist es möglich, mit einer sowieso erforderlichen Vermessungseinrichtung sowohl eine Vermessung der Vorlage zur Erzeugung eines für die Herstellung des Formteils erforderlichen Datensatz vorzunehmen als auch eine Erfassung der Kennung des Werkstücks durchzuführen, aus dem das Formteil herausgearbeitet werden soll.

Eine optische Erfassung eignet sich besonders gut, wenn die Kennung als Strichcode, Zahlencode oder Farbcode vorliegt. Auch im Falle einer Kennung als Formencode oder Höhencode ist eine optische Vermessung möglich. Grundsätzlich ist es aber auch vorstellbar, dass die Vermessung der Vorlage durch Abtasten erfolgt und dass in diesem Fall auch die Kennung abgetastet wird.

Die Mittel zur Erfassung einer Kennung können in Form eines Sensors ausgebildet sein, der eine in Form von Helligkeitsunterschieden am Werkstück angebrachte Kennung erfasst, aber auch in einer Bilderkennung eines gemessenen Intensitätsbilds bestehen, welche beispielsweise eine in Form von Helligkeitsunterschieden am Werkstück angebrachte Kennung oder sogar eine Buchstaben- oder Zahlenfolgen erfasst. Der Sensor kann weiterhin derart ausgebildet sein, dass er die in Form von Höhenunterschieden am Werkstück angebrachte Kennung erfasst.

Vorteilhafterweise umfassen die Mittel zur Erfassung einer Kennung einen optischen Sensor für die Abstandsmessung. Der Sensor kann in seiner Leistung über die Intensität gesteuert sein, wobei die Regelgröße der Leistung von der Kennung abhängt.

Gemäß einer Weiterbildung ist eine Software zur Herstellung des Passkörpers vorhanden und die Software ist derart ausgebildet, dass die aus der Kennung erhaltene Information in die Berechnung des herzustellenden Passkörpers und/oder in die Steuerung der Bearbeitungsmaschine einfließen und/oder zu Dokumentationszwecken verwendbar sind. Die Dokumentation umfasst dabei neben der Speicherung der in der Kennung enthaltenen Informationen auch die Bereithaltung der Information zum Zweck der Weiterverarbeitung wie Abrechnung, Qualitätssicherung usw.

Vorteilhafterweise ist die Kennung als- Strichcode von der Vermessungseinrichtung erfassbar. Dadurch können bestehende Codiersysteme verwendet werden.

In einer Weiterbildung ist die Vermessungseinrichtung Bestandteil einer Bearbeitungsvorrichtung zur Herstellung von dentalen Passkörpern aus einem Werkstück. Die Bearbeitungsvorrichtung weist eine Aufnahmevorrichtung für das Werkstück auf, die auch zur Aufnahme einer zu vermessende Vorlage geeignet ist oder dazu eine weitere Aufnahmevorrichtung aufweist. Mittels der Vermessungseinrichtung erfolgt eine Erfassung der Kennung des in der Aufnahmevorrichtung gehaltenen Werkstücks, an welchem eine Kennung mit Informationen über das Werkstück angebracht ist. Die Kennung kann auch am Werkstückhalter angebracht sein solange sichergestellt ist, dass die Kennung in eingespanntem Zustand erkennbar bleibt. Das Werkstück wird also in der Aufnahmevorrichtung identifiziert, in der es dann bearbeitet wird.

Vorteilhafterweise ist die Vermessungseinrichtung zur Vermessung und zur Erfassung der Kennung lösbar in der Bearbeitungsvorrichtung gehalten. Damit ist es möglich, dass der Ort der Vermessung der Vorlage und der Ort der Erfassung der Kennung verschieden sind. Beispielsweise kann eine Vermessung in der Mundhöhle eines. Patienten erfolgen und die Erfassung der Kennung an der Bearbeitungsmaschine.

Ein weiterer Gegenstand der Erfindung besteht in einer Bearbeitungsvorrichtung zur Herstellung von dentalen Passkörpern aus einem Werkstück, welche eine Aufnahmevorrichtung für das Werkstück umfasst. Am Werkstück oder an einem Werkstückhalter ist eine Kennung mit Informationen über das Werkstück angebracht. Darüber hinaus sind Mittel zur Erfassung der Kennung des in der Aufnahmevorrichtung gehaltenen Werkstücks vorgesehen.

Der Vorteil besteht darin, dass die Kennung des Werkstücks unmittelbar vor der Bearbeitung erfolgen mus, ohne dass das Werkstück nochmals verändert werden muss. Eine fehlerhafte Zuordnung von Werkstückinformationen lässt sich dadurch zuverlässig vermeiden.

Die Aufnahmevorrichtung kann auch zur Aufnahme einer zu vermessende Vorlage geeignet sein, wobei dann eine einzige erfindungsgemäße Vermessungseinrichtung zur Vermessung der Vorlage einerseits und zur Erfassung der Kennung andererseits vorgesehen sein kann.

An der Bearbeitungsvorrichtung kann eine Halterung zur lösbaren Aufnahme der Vermessungseinrichtung vorgesehen sein.

Dadurch ist es möglich, die Vermessung auch an einem anderen Ort durchzuführen.

Vorteilhafterweise ist eine Software zur Herstellung des Passkörpers vorhanden. Die Software ist dabei derart ausgebildet, dass die aus der Kennung erhaltene Information in die Berechnung des herzustellenden Passkörpers und/oder in die Steuerung der Bearbeitungsmaschine einfließt und/oder zu Dokumentationszwecken verwendbar ist. Insbesondere bei der Steuerung der Bearbeitungsmaschine unter Berücksichtigung der in der Kennung enthaltenen Informationen lassen sich beträchtliche Vorteile erzielen, die beispielsweise in der Anpassung der Vorschubgeschwindigkeit in Abhängigkeit des gewählten Materials oder bei der Konstruktion die Berücksichtigung von minimalen Wandstärken, in Abhängigkeit der Festigkeit des Materials bestehen.

### Kurzbeschreibung der Zeichnung

In der Zeichnung ist ein Ausführungsbeispiel der Erfindung angegeben. Es zeigt:
- Fig. 1: einen schematischen Aufbau einer erfindungsgemäßen Bearbeitungsmaschine mit einer erfindungsgemäßen Vermessungseinrichtung und angeschlossenem Computer;
- Fig. 2: eine Detailansicht der Bearbeitungsmaschine im Bereich des Bearbeitungsraums.
- Fig. 3: eine Erfassungseinheit für eine Vermessungseinrichtung in Seitenansicht,
- Fig. 4: die Erfassungseinheit aus Fig. 3 von oben gesehen. Ausführungsbeispiel

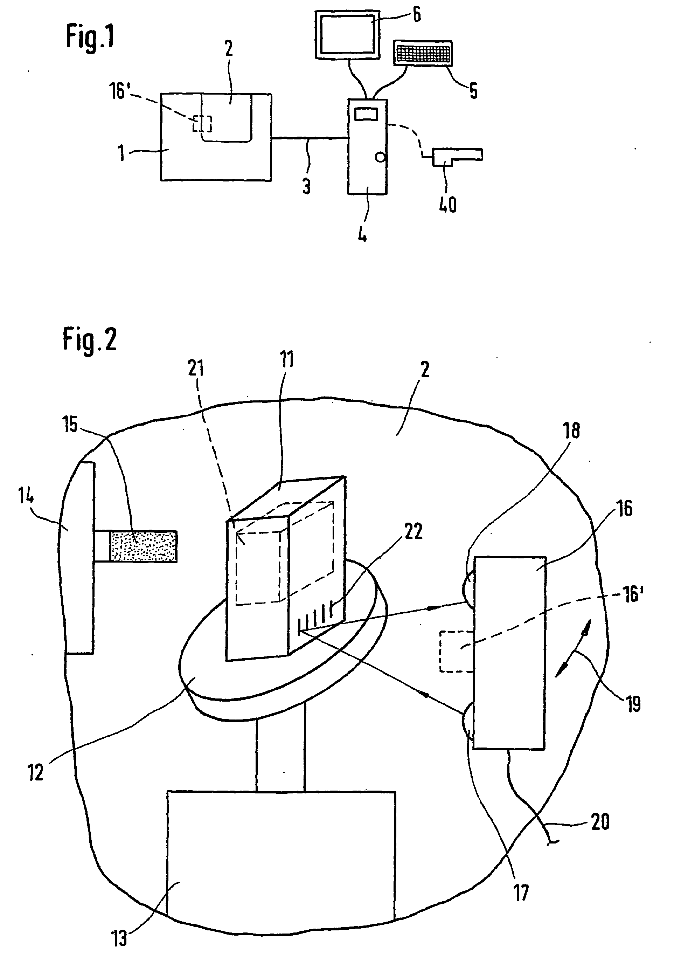

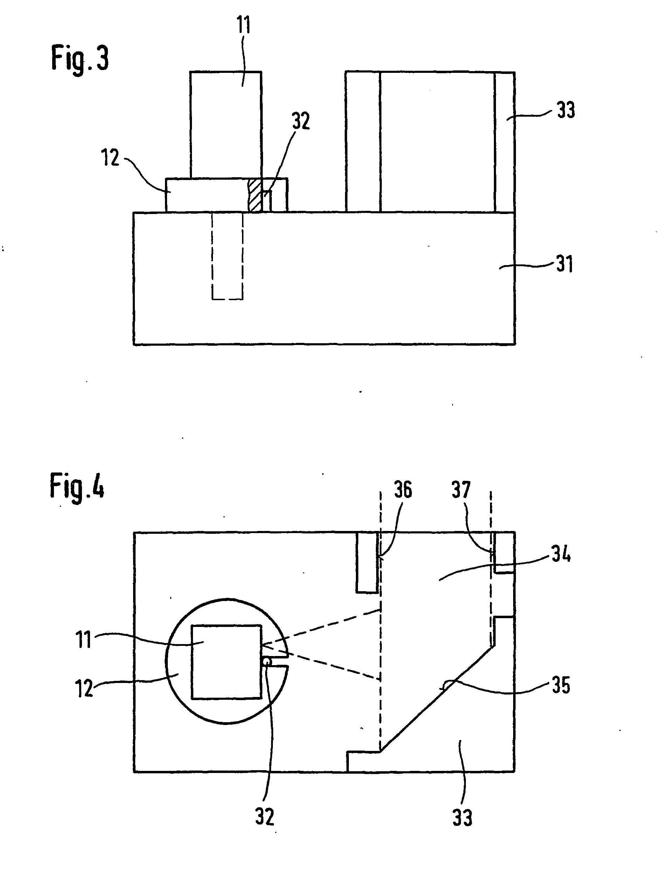

In Fig. 1 ist eine Bearbeitungsmaschine 1 mit einem Bearbeitungsraum 2 dargestellt, welche über ein Verbindungskabel 3 mit einem Computer (PC) 4 verbunden ist. Der Computer kann auch in das Gehäuse der Bearbeitungsmaschine integriert sein. Der PC 4 ist mit einer Eingabeeinrichtung in Form einer Tastatur und einer Ausgabeeinrichtung in Form eines Bildschirms 6 versehen. Über die Verbindungsleitung 3 können Daten übertragen werden, welche zum Betrieb der Bearbeitungsvorrichtung erforderlich sind.

In der Bearbeitungskammer 2 findet sowohl die Bearbeitung eines Werkstücks als auch eine Vermessung entweder einer Vorlage statt, zu der eine Kopie angefertigt werden soll oder einer dreidimensionalen Geometrie, die durch den herzustellenden Passkörper ergänzt wird öder es wird eine Vermessung zur Feststellung der Position des zu bearbeitenden Werkstücks vorgenommen.

Falls in der Bearbeitungskammer 2 keine Vermessung erfolgt, kann eine Vermessungskamera 40 vorgesehen sein, welche mit dem Computer verbunden ist und mit welcher beispielsweise Aufnahmen aus dem Mund des Patienten erstellt werden.

In diesem Fall können in der Bearbeitungskammer 2 aber von der Vermessungseinrichtung 16 unabhängige Mittel 16' zur Erfassung der Kennung vorgesehen sein, sodass selbst dann, wenn keine Vermessung möglich ist, eine Erfassung der Kennung des eingespannten Rohlings 11 möglich ist.

In Fig. 2 ist ein Teilbereich des Bearbeitungsraum 2 im Detail dargestellt. Zu erkennen ist ein Werkstück in Form eines noch zu bearbeitenden Rohlings 11, wie er von Dentalkeramiken bekannt ist, wobei der Rohling 11 auf einem Halter 12 befestigt ist und der Halter 12 in eine Aufnahmevorrichtung 13 eingespannt ist.

In dem Bearbeitungsraum 2 befindet sich darüber hinaus mindestens ein Werkzeug 14 mit einem Schleifstift 15, welcher beim Eingriff in den Rohling 11 eine Materialabtragung bewirkt, wozu er in schnelle Rotation versetzt wird.

Darüber hinaus ist in dem Bearbeitungsraum 2 eine Vermessungseinrichtung 16 vorgesehen, welche im Ausführungsbeispiel als Abstandssensor ausgebildet ist. Die Vermessungseinrichtung 16 umfasst einen Strahlensender 17, aus welchem ein Messstrahl austritt und einen Strahlenempfänger 18, in welchen ein vom Rohling reflektierter bzw. rückgestreuter Empfangsstrahl eintritt. Die Vermessungsvorrichtung 16 ist relativ zum Rohling 11 verstellbar; angedeutet durch den Pfeil 19. Eine derartige Vermessungseinrichtung ist in der EP 1 093 768 A2 dargestellt und erläutert und auf die dortigen Ausführungen wird ausdrücklich Bezug genommen. Insbesondere kann die Vermessungseinrichtung 16 auch auf dem Werkzeug 14 angebracht sein und zusammen mit diesem bewegt werden.

Der Rohling ist in seiner Größe und Form so ausgewählt, dass das herzustellende Formteil 21 aus dem Rohling 11 herausgearbeitet werden kann. Darüber hinaus weist der Rohling 11 eine Kennung 22 auf, in welcher unter anderem materialspezifische Informationen enthalten sind. Die Kennung 22 ist als Strich-Code (Bar-Code) ausgeführt, bei dem die Breite der einzelnen Striche sowie der Abstand untereinander eine bestimmte Zeichenfolge bedeutet. Die Striche und Zwischenräume können dabei aufgrund Ihrer unterschiedlichen Helligkeit von einem Strichcodeleser erfasst und über eine Software in auswertbare Daten übersetzt werden. Die Striche sind in der Regel auf dem Rohling oder auf dem Halter aufgedruckt.

Anstelle von Helligkeitsinformationen kann aber auch eine Kennung vorgesehen sein, welche Höhe-Tiefeninformationen enthält und die beispielsweise mittels Laser in den Rohling eingebracht sein können.

Über die Vermessungseinrichtung 16 festgestellte Signale werden über ein Verbindungskabel 20 an die Bearbeitungsvorrichtung und gegebenenfalls nach einer Vorverarbeitung von dieser über das Verbindungskabel 3 (Fig. 1) an den Computer übermittelt. Die Kennung 22 wird auf diese Art und Weise von der im Computer 4 ablaufenden Software ausgewertet.

Der Ablauf beim Einsatz einer erfindungsgemäßen Bearbeitungsvorrichtung wird im nachfolgenden beschrieben. Ausgehend von einem Datensatz eines herzustellenden Formteils, welcher durch berührungsloses Vermessen, Abtasten oder durch computergestützte Konstruktion (CAD) erstellt wurde und der auf dem Computer 4 abrufbar gespeichert ist, wählt der Benutzer ein Rohling 11 aus, aus welchem das Formteil herausgearbeitet werden soll. Alternativ dazu kann der Datensatz auch durch Einspannen einer Vorlage in die Aufnahmevorrichtung des Werkstücks und anschließendes Vermessen mit der Vermessungseinrichtung 16 erzeugt werden.

Der Rohling 11 kann aus einem Material sein, welches nach der Bearbeitung noch thermisch behandelt wird. Als Material kommt hier insbesondere eine noch nicht vollständig gesinterte Keramik in Betracht.

Dieses Material verändert seine Form in vorhersehbarer Weise während der thermischen Behandlung, wobei jedoch die bestimmten Eigenschaften des Materials von der Herstellung abhängen und daher von Charge zu Charge unterschiedlich sein können. Im Falle der vorerwähnten noch nicht vollständig verfestigten Dentalkeramik erfolgt nach dem Bearbeiten ein Sinterprozess, in dem das Formteil eine höhere Festigkeit erhält. Allerdings erfolgt durch die thermische Behandlung des Sinterns auch ein Schrumpfen.

Es ist daher erforderlich, die Dimensionsänderung durch Schrumpfen bei der Konstruktion des durch Bearbeitung herzustellenden Formteils zu berücksichtigen. Dieses Formteil muss mit einem Übermaß hergestellt werden, so dass die anschließende Schrumpfung auf das Endmaß erfolgt. Die Anpassung des Datensatzes über das herzustellende Formteil erfolgt über die in der Kennung 22 vorhandene Materialspezifische Information über die Software, so dass eine korrigierter Datensatz für die Herstellung des Formteils verwendet wird.

Neben den Schrumpfungsparametern können in der Kennung 22 auch andere Angaben enthalten sein, beispielsweise über die Härte des Materials, das verwendete Material, die Korngröße, die Blockgröße, die Blockform, die Farbe, Seriennummer oder andere Identifikationsmerkmale des Einzelstücks und anderes.

Anhand dieser Informationen können auch die Bearbeitungsgeschwindigkeit, das zu verwendende Werkzeug, Mindestwandstärken und andere für die Bearbeitung wichtige Größen abgeleitet werden und von der Software zur Erstellung des korrigierten Datensatzes berücksichtigt werden.

Als Bearbeitungswerkzeug kommen insbesondere Schleifscheiben, Zylinderschleifer oder Kegelschleifer in Frage.

Die Vermessungseinrichtung kann wie vorstehend bereits erwähnt dazu dienen, ein Modell des herzustellenden Teils in den räumlichen Dimensionen zu vermessen. Sie kann jedoch auch dazu herangezogen werden, die Orientierung des Rohlings 11 im Bearbeitungsraum 2 und bezüglich seines Halters 12 festzustellen, gegebenenfalls auch um die Lage des Werkzeugs 15 zu ermitteln. Derartige Vermessungseinrichtungen und Messverfahren sind im Stand der Technik hinlänglich bekannt.

Dank der Weiterbildung gemäß der Erfindung können diese Vermessungseinrichtungen nun auch zur Identifizierung einer Kennung herangezogen werden.

Im Falle des Abstandssensors 16 gemäß Fig. 1 wird eine Laserdiode in der Leistung in Abhängigkeit der Intensität des Lichtes in der empfangenden Photodiode geregelt (vergleiche EP 1 093 768 A2), so dass die Regelgröße der Leistung Rückschlüsse auf eine als Strichcode ausgebildete Kennung 22 zulässt. Alternativ dazu kann bereits die Intensität selbst ausgewertet werden, wobei die Leistung der Laserdiode fest eingestellt ist.

Dabei ist ein mit einer Kennung versehener Rohling in seiner räumlichen Orientierung bezüglich des Sensors so festgelegt, dass der Sensor die Kennung erfasst.

Wird ein dunkel gefärbter Bereich der Kennung erfasst, welcher das einfallende Licht nur schwach reflektiert, so wird nur eine geringe Intensität gemessen und die Leistung steigt an. Wird umgekehrt wieder ein heller Bereich der Kennung erfasst, so wird eine erhöhte Intensität gemessen und die erforderliche Leistung fällt ab. Anhand dieses Wechsels können die in der Kennung als Strichcode verschlüsselten Materialeigenschaften erfasst werden.

Wie bereits erwähnt kann die Kennung in Form von Höhenunterschieden am Werkstück angebracht sein, so dass beim Erfassen der Kennung anstelle von Bereichen unterschiedlicher Intensität Bereiche unterschiedlicher Höhe erfasst und ausgewertet werden.

Alternativ dazu kann die Intensität auf einem hellen Bereich außerhalb der Kennung (oder als Bereich der Kennung) durch Einstellen der Leistung vorgegeben werden und dann beim Abfahren der Kennung die Schwankung der Intensität bei konstanter Leistung festgestellt werden. Anhand der Schwankungen der Intensität oder des Intensitätverlaufs kann die Breite der Striche und der Zwischenräume erkannt werden.

Bei Verwendung einer bekannten intraoralen Vermessungskamera für die Aufnahme eines Restaurationsgebiets und die anschließende Erzeugung von Konstruktionsdaten lässt sich die Kennung in Form eines Strichcodes mit unterschiedlicher Intensität der hellen und dunklen Bereiche aus einem erfassten Intensitätsbild auswerten.

Darüber hinaus lassen sich höhencodierte Informationen mit derselben intraoralen Vermessungskamera erfassen als Kennung identifizieren

Zu diesem Zweck wird das Werkstück in eine in den Fig. 3, 4 dargestellte Erfassungseinheit 31 eingesteckt und in seiner Lage über einen mit dem Halter 12 des Rohlings 11 zusammenwirkenden Zentrierbolzen 32 genau zu einer Kameraführung 33 ausgerichtet. Die Vermessungskamera 34 liegt dabei seitlich auf der Oberseite der Erfassungseinheit 31 auf und wird über Stütz- und Führungsflächen 35-37 ebenfalls in ihrer Lage ausgerichtet. In dieser Lage des Werkstücks und der Kamera erfolgt eine Aufnahme, wobei die Intensität erfasst wird.

Selbstverständlich ist es möglich, die Erfassungseinheit 31 im Bearbeitungsraum selbst anzuordnen, wobei dann der Halter 12 in der Aufnahmevorrichtung 13 selbst eingespannt ist, sodass der zu bearbeitende Rohling nach der Erfassung der Kennung bis zum Abschluss der Bearbeitung nicht mehr entfernt wird.

Da durch die genaue Lagebeziehung des Werkstücks und der Kamera bekannt ist, in welchem Bereich die Kennung auf dem Werkstück angebracht ist, lässt sich auf der Aufnahme durch Bilderkennung in diesem Bereich der Strichcode identifizieren.

Liegt die Kennung als Höhenbild vor, so werden die Höhenunterschiede als Daten erkennbar, ebenso die Breite der Balken oder Vertiefungen.

Auch eine freie Erfassung der Kennung ist vorstellbar, wobei dann der Bereich der Kennung durch Bildererkennungsalgorithmen identifiziert werden muß.

Dies geschieht durch eine freihändige Positionierung der Vermessungskamera einerseits und des Rohlings mit Kennung andererseits. Dann wird die Aufnahme ausgelöst.

Die Vermessungskamera arbeitet mit einem Sensor zur Höhenmessung, der auch ein Intensitätsbild liefert, das für die Erkennung einer aus unterschiedlichen Intensitäten bestehenden Kennung verwendbar ist.

## Patentansprüche

1. Vermessungseinrichtung (16; 40) mit Mitteln (16; 16') zur Vermessung von Vorlagen für die Herstellung von dentalen Passkörpern unter Erzeugung eines dreidimensionalen Datensatzes als Vorlage für eine dreidimensionale Bearbeitung eines Werkstücks (11), **dadurch gekennzeichnet, dass** die Mittel zur Vermessung (16; 16') auch zur Erfassung einer Kennung mit Informationen über das Werkstück ausgebildet sind.

2. Vermessungseinrichtung nach Anspruch 1, **dadurch gekennzeichnet, dass** die Mittel zur Erfassung einer Kennung einen Sensor umfassen, der eine in Form von Helligkeitsunterschieden am Werkstück angebrachte Kennung erfasst.

3. Vermessungseinrichtung nach Anspruch 1, **dadurch gekennzeichnet, dass** die Mittel zur Erfassung einer Kennung einen Sensor umfassen, der die in Form von Höhenunterschieden am Werkstück angebrachte Kennung erfasst.

4. Vermessungseinrichtung nach einem der Ansprüche 1 bis 3, **dadurch gekennzeichnet, dass** die Mittel zur Erfassung einer Kennung einen Sensor für die Abstandsmessung umfassen.

5. Vermessungseinrichtung nach Anspruch 4, **dadurch gekennzeichnet, dass** der Sensor in seiner Leistung über die Intensität gesteuert ist und dass die Regelgröße der Leistung von der Kennung abhängt.

6. Vermessungseinrichtung nach einem der Ansprüche 1 bis 5, **dadurch gekennzeichnet, dass** eine Software zur Herstellung des Passkörpers vorhanden ist und dass die Software derart ausgebildet ist, dass die aus der Kennung erhaltene Information in die Berechnung des herzustellenden Passkörpers und/oder in die Steuerung der Bearbeitungsvorrichtung einfließen und/oder zu Dokumentationszwecken verwendbar ist.

7. Vermessungseinrichtung nach einem der Ansprüche 1 bis 6, **dadurch gekennzeichnet, dass** die Kennung als Strichcode von der Vermessungseinrichtung erfassbar ist.

8. Vermessungseinrichtung nach einem der Ansprüche 1 bis 7, **dadurch gekennzeichnet, dass** die Vermessungseinrichtung (16; 40) Bestandteil einer Bearbeitungsvorrichtung zur Herstellung von dentalen Passkörpern aus einem Werkstück (11) ist, wobei die Bearbeitungsvorrichtung eine Aufnahmevorrichtung (13; 31) für das Werkstück (11) aufweist, die auch zur Aufnahme einer zu vermessende Vorlage geeignet ist oder dazu eine weitere Aufnahmevorrichtung aufweist, wobei am Werkstück (11) oder an einem Werkstückhalter (12) eine Kennung (22) mit Informationen über das Werkstück (11) angebracht ist und wobei mittels der Vermessungseinrichtung eine Erfassung der Kennung des in der Aufnahmevorrichtung (13; 31) gehaltenen Werkstücks (11) erfolgt.

9. Vermessungseinrichtung nach Anspruch 8, **dadurch gekennzeichnet, dass** die Vermessungseinrichtung zur Vermessung und zur Erfassung der Kennung lösbar in der Bearbeitungsvorrichtung gehalten ist.

10. Bearbeitungsvorrichtung zur Herstellung von dentalen Passkörpern aus einem Werkstück (11), mit einer Aufnahmevorrichtung (13; 31) für das Werkstück (11), wobei am Werkstück (11) oder an einem Werkstückhalter (12) eine Kennung (22) mit Informationen über das Werkstück (11) angebracht ist, **dadurch gekennzeichnet, dass** Mittel zur Erfassung der Kennung des in der Aufnahmevorrichtung (13; 31) gehaltenen Werkstücks (11) vorgesehen sind, wobei eine einzige Vermessungseinrichtung (16; 40) nach einem der Ansprüche 1 bis 9 zur Vermessung der Vorlage und zur Erfassung der Kennung vorgesehen ist.

11. Bearbeitungsvorrichtung nach Anspruch 10, **dadurch gekennzeichnet, dass** die Aufnahmevorrichtung (13; 31) auch zur Aufnahme einer zu vermessende Vorlage geeignet ist.

12. Bearbeitungsvorrichtung nach Anspruch 11, **dadurch gekennzeichnet, dass** eine Halterung zur lösbaren Aufnahme der Vermessungseinrichtung vorgesehen ist.

13. Bearbeitungsvorrichtung nach einem der Ansprüche 10 bis 12, **dadurch gekennzeichnet, dass** eine Software zur Herstellung des Passkörpers vorhanden ist und dass die Software derart ausgebildet ist, dass die aus der Kennung erhaltene Information in die Berechnung des herzustellenden Passkörpers und/oder in die Steuerung der Bearbeitungsvorrichtung einfließt und/oder zu Dokumentationszwecken verwendbar ist.

## Claims

1. Measuring device (16; 40) comprising means (16; 16') for the measurement of models for the production of dental fittings involving the generation of a three-dimensional data set as a model for three-dimensional machining of a workpiece (11), **characterized in that** the means for measurement (16; 16') are also designed for the acquisition of an identifier comprising information about the workpiece.

2. Measuring device according to Claim 1, **characterized in that** the means for the acquisition of an identifier comprise a sensor which acquires an identifier in the form of differences in brightness attached to the workpiece.

3. Measuring device according to Claim 1, **characterized in that** the means for the acquisition of an identifier comprise a sensor which acquires the identifier in the form of differences in height attached to the workpiece.

4. Measuring device according to any one of Claims 1 to 3, **characterized in that** the means for the acquisition of an identifier comprise a sensor for distance measurement.

5. Measuring device according to Claim 4, **characterized in that** the output power of the sensor is controlled by the intensity and that the control variable of the output power is dependent on the identifier.

6. Measuring device according to any one of Claims 1 to 5, **characterized in that** software for the production of the fitting is present and that the software is designed such that the information obtained from the identifier is included in computation of the fitting to be produced and/or in control of the machining apparatus and/or can be used for documentation purposes.

7. Measuring device according to any one of Claims 1 to 6, **characterized in that** the identifier can be acquired as a bar code by the measuring device.

8. Measuring device according to any one of Claims 1 to 7, **characterized in that** the measuring device (16; 40) is a component of a machining apparatus for the production of dental fittings from a workpiece (11), the machining apparatus having a work-holding device (13; 31) for the workpiece (11), which work-holding device is also adapted to accommodate a model to be measured or has another work-holding device for this purpose, an identifier (22) comprising information about the workpiece (11) being attached to the workpiece (11) or to a workpiece holder (12), and acquisition of the identifier of the workpiece (11) held in the work-holding device (13; 31) being effected by means of the measuring device.

9. Measuring device according to Claim 8, **characterized in that** the measuring device is detachably held in the machining apparatus for the purpose of measurement and for acquisition of the identifier.

10. Machining apparatus for the production of dental fittings from a workpiece (11), comprising a work-holding device (13; 31) for the workpiece (11), wherein an identifier (22) comprising information about the workpiece (11) is attached to the workpiece (11) or to a workpiece holder (12), **characterized in that** means for acquisition of the identifier of the workpiece (11) held in the work-holding device (13; 31) are provided, a single measuring device (16; 40) according to any one of Claims 1 to 9 being provided for the purpose of measuring the model and acquiring the identifier.

11. Machining apparatus according to Claim 10, **characterized in that** the work-holding device (13; 31) is also adapted to accommodate a model to be measured.

12. Machining apparatus according to Claim 11, **characterized in that** a holder is provided for detachable accommodation of the measuring device.

13. Machining apparatus according to any one of Claims 10 to 12, **characterized in that** software for the production of the fitting is present and that the software is designed such that the information obtained from the identifier is included in computation of the fitting to be produced and/or in control of the machining apparatus and/or can be used for documentation purposes.

## Revendications

1. Dispositif de mesure (16 ; 40) avec des moyens (16 ; 16') de mesure de modèles pour la fabrication de corps d'ajustage dentaires en créant un fichier de données tridimensionnelles comme modèle pour un usinage tridimensionnel d'une pièce (11), **caractérisé en ce que** les moyens de mesure (16 ; 16') sont également conçus pour la détection d'une identification avec des informations sur la pièce.

2. Dispositif de mesure selon la revendication 1, **caractérisé en ce que** les moyens de détection d'une identification comprennent un capteur qui détecte l'identification apposée sur la pièce sous forme de variations de luminosité.

3. Dispositif de mesure selon la revendication 1, **caractérisé en ce que** les moyens de détection d'une identification comprennent un capteur qui détecte l'identification apposée sur la pièce sous forme de variations de hauteur.

4. Dispositif de mesure selon l'une quelconque des revendications 1 à 3, **caractérisé en ce que** les moyens de détection d'une identification comprennent un capteur pour la mesure de distance.

5. Dispositif de mesure selon la revendication 4, **caractérisé en ce que** la puissance du capteur est commandée par l'intensité et **en ce que** la valeur de réglage de la puissance dépend de l'identification.

6. Dispositif de mesure selon l'une quelconque des revendications 1 à 5, **caractérisé en ce qu'**il est prévu un logiciel pour la fabrication du corps d'ajustage et **en ce que** le logiciel est conçu de telle manière que l'information obtenue à partir de l'identification se répercute sur le calcul du corps d'ajustage à fabriquer et/ou sur la commande du dispositif d'usinage et/ou est utilisée à des fins de documentation.

7. Dispositif de mesure selon l'une quelconque des revendications 1 à 6, **caractérisé en ce que** l'identification peut être détectée par le dispositif de mesure sous forme de code barres.

8. Dispositif de mesure selon l'une quelconque des revendications 1 à 7, **caractérisé en ce que** le dispositif de mesure (16 ; 40) fait partie d'un dispositif d'usinage pour la fabrication de corps d'ajustage dentaires à partir d'une pièce (11), le dispositif d'usinage comportant un dispositif de réception (13 ; 31) pour la pièce (11) qui est également adapté pour la réception d'un modèle destiné à être mesuré ou comportant, en outre, un autre dispositif de réception, une identification (22) avec des informations sur la pièce (11) étant apposée sur la pièce (11) ou sur un support de pièce (12) et une détection de l'identification de la pièce (11) fixée dans le dispositif de réception (13 ; 31) étant réalisée au moyen du dispositif de mesure.

9. Dispositif de mesure selon la revendication 8, **caractérisé en ce que** le dispositif de mesure pour la mesure et la détection de l'identification est fixé de manière amovible dans le dispositif d'usinage.

10. Dispositif d'usinage pour la fabrication de corps d'ajustage dentaires à partir d'une pièce (11), avec un dispositif de réception (13 ; 31) pour la pièce (11), une identification (22) avec des informations sur la pièce (11) étant apposée sur la pièce (11) ou sur un support de pièce (12), **caractérisé en** de qu'il est prévu des moyens pour la détection de l'identification de la pièce (11) fixée dans le dispositif de réception (13 ; 31), un seul dispositif de mesure (16 ; 40) selon l'une quelconque des revendications 1 à 9 étant prévu pour la mesure du modèle et pour la détection de l'identification.

11. Dispositif d'usinage selon la revendication 10, **caractérisé en ce que** le dispositif de réception (13 ; 31), est également adapté pour la réception d'un modèle destiné à être mesuré.

12. Dispositif d'usinage selon la revendication 11, **caractérisé en ce qu'**il est prévu un support pour la réception amovible du dispositif de mesure.

13. Dispositif d'usinage selon l'une quelconque des revendications 10 à 12, **caractérisé en ce qu'**il est prévu un logiciel pour la fabrication du corps d'ajustage et **en ce que** le logiciel est conçu de telle manière que l'information obtenue à partir de l'identification se répercute sur le calcul du corps d'ajustage à fabriquer et/ou sur la commande du dispositif d'usinage et/ou est utilisée à des fins de documentation.
